# EUROPÄISCHE PATENTSCHRIFT

(11) **EP 3 299 803 B1**
(45) Veröffentlichungstag und Bekanntmachung des Hinweises auf die Patenterteilung: **20.04.2022**
(21) Anmeldenummer: 17187386.2
(22) Anmeldetag: 23.08.2017
(51) Int. Cl.: G01N 25/18

(54) **VERFAHREN ZUR KALIBRIERUNG EINER TEMPERIERUNG BEI THERMISCHEN ANALYSEN VON PROBEN**
METHOD FOR CALIBRATING THE TEMPERATURE CONTROL IN THERMAL ANALYSIS OF SAMPLES
PROCÉDÉ D'ÉTALONNAGE RÉGULATION DE TEMPÉRATURE DANS LES ANALYSES THERMIQUES D'ÉCHANTILLONS

(30) Priorität: 21.09.2016 DE 102016117754
(43) Veröffentlichungstag der Anmeldung: 28.03.2018
(73) Patentinhaber: Netzsch-Gerätebau GmbH, 95100 Selb (DE)
(72) Erfinder: BRUNNER, Martin, 95100 Selb (DE); LINDEMANN, Andrè, 95100 Selb (DE)

(56) Entgegenhaltungen:
- DE-A1- 10 013 173
- DE-A1-102012 106 955
- US-A- 6 146 013
- Tm M Manuelian ET AL: "Thermal Diffusivity, Specific Heat, and Thermal Conductivity Measurment Using NETZSCH LFA 447 Nanoflash", , 16. März 2008 (2008-03-16), XP055374833, Gefunden im Internet: URL:http://www.chem.mtu.edu/org/ctc/pdf/Na noflash web page 1-29-09.pdf

## Beschreibung

Die vorliegende Erfindung betrifft ein Verfahren zum Kalibrieren einer Vorrichtung zur thermischen Analyse von Proben nach dem Oberbegriff des Anspruchs 1.

In der thermischen Analyse werden Eigenschaften eines Materials anhand einer Probe aus dem betreffenden Material als Funktion der Temperatur untersucht. Hierbei spielt eine korrekte Thermometrie, d. h. eine korrekte Messung der Temperatur der Probe, eine wichtige Rolle.

Aus dem Stand der Technik von Vorrichtungen zur thermischen Analyse von Proben sind z. B. Temperatursensoren in Form von Thermoelementen oder elektrischen Widerstandsthermometern bekannt, die z. B. in thermischem Kontakt zur Probe angeordnet werden können, um die Temperatur einer Probe während deren Untersuchung zu messen.

Diese Messung kann jedoch mehr oder weniger fehlerbehaftet sein, etwa weil ein derartiger Temperatursensor nicht die Temperatur im Inneren der Probe sondern z. B. an einem Rand der Probe misst. Dieser Messfehler ist noch bedeutsamer für oftmals zum Einsatz kommende Temperatursensoren, die gar nicht in direktem Kontakt zur Probe angeordnet werden können, sondern stattdessen der Probe benachbart, also räumlich von dieser separiert, innerhalb einer Probenkammer der Vorrichtung angeordnet sind.

Dieses Problem kann durch eine geeignete "Kalibrierung" des verwendeten Temperatursensors bzw. der damit gebildeten Temperaturmesseinrichtung deutlich verringert werden. Mit Kalibrierung ist gemeint, dass ein oder mehrere Korrekturparameter ermittelt und gespeichert werden, um diese bei nachfolgenden thermischen Analysen entsprechend berücksichtigen zu können.

Für eine derartige Kalibrierung kann z. B. vorgesehen sein, in der betreffenden Vorrichtung zur thermischen Analyse im Verlauf eines Temperaturprogrammes (vorbestimmte zeitliche Veränderung der Probentemperatur) die Temperatur von einer oder mehreren bei jeweils bekannten Temperaturen aufschmelzenden Proben zu messen, um sodann anhand eines Vergleichs der mittels der Temperaturmesseinrichtung gemessenen Schmelztemperaturen mit den z. B. aus der Literatur bekannten Schmelztemperaturen die Temperaturmesseinrichtung zu kalibrieren.

Alternativ zur Verwendung eines derartigen Schmelzstandards kann für die Kalibrierung auch z. B. eine Probe mit bekannter Curie-Temperatur verwendet werden.

Vorrichtungen zur thermischen Analyse, bei denen eine derartige Kalibrierung der Temperaturmesseinrichtung z. B. in vorstehend beschriebener Weise durchgeführt werden kann, sind in vielfältigen Ausführungen aus dem Stand der Technik bekannt. Ein Beispiel hierfür ist das Gerät "LFA 467 HT HyperFlash" der Fa. Netzsch-Gerätebau GmbH, Selb, Deutschland. Dieses bekannte Gerät umfasst:
- eine Probenkammer mit mehreren Probenhaltern, die jeweils zum Halten einer Probe ausgebildet sind,
- für jeden der mehreren Probenhalter eine diesem zugeordnete ansteuerbare Temperiereinrichtung (hier: "Minirohrofen") zum Temperieren der von diesem Probenhalter gehaltenen Probe,
- eine Temperaturmesseinrichtung (hier: mit mehreren, jeweils einem der Probenhalter zugeordneten Thermoelementen) zum Messen der Temperatur der Proben,
- eine photothermische Messeinrichtung zum Bestrahlen einer ersten Seite der Proben mit einem elektromagnetischen Anregungspuls und zum Erfassen einer infolge des Anregungspulses von einer der ersten Seite gegenüberliegenden zweiten Seite der Proben abgegebenen Wärmestrahlung,
- eine Steuer- und Auswerteeinrichtung zum Ansteuern der Temperiereinrichtungen und der photothermischen Messeinrichtung und zum Aufnehmen von Messdaten, welche wenigstens eine von der Temperatur der Proben verschiedene physikalische Eigenschaft der Proben (hier: Temperaturleitfähigkeit und/oder spezifische Wärmekapazität) in Abhängigkeit von der Temperatur der Proben repräsentieren.

Ein weiteres artgleiches Gerät wird in "Thermal Diffusivity, Specific Heat, and Thermal Conductivity Measurment Using NETZSCH LFA 447 Nanoflash" (M Manuelian; R Campbell, 16-05-2008) beschrieben.

Nachteilig ist bei den bekannten gattungsgemäßen Kalibrierverfahren beispielsweise der damit verbundene Aufwand und die Einschränkung auf ganz bestimmte "Kalibriertemperaturen" (bei denen ein Aufschmelzen bzw. eine andere gut detektierbare Phasenumwandlung erfolgt).

Wenn die Kalibrierung über einen relativ großen Temperaturbereich erfolgen soll, so kommt erschwerend hinzu, dass für jeden einzelnen Probenhalter (jede "Proben- bzw. Messposition") jeweils mehrfach Kalibriermessungen mit verschiedenen, als Standard dienenden Proben durchgeführt werden müssen. Die verschiedenen Phasenumwandlungstemperaturen dieser Proben liefern dann eine entsprechende Mehrzahl von "Stützstellen" (Kalibriertemperaturen) über den betreffenden Temperaturbereich.

Außerdem ist immer auch auf etwaige chemische Materialreaktionen zu achten, weswegen beispielsweise eine Kobalt-Standardprobe (mit einer vorbekannten Curie-Temperatur von ca. 1115°C) nicht in einem Silizium enthaltenden Probenhalter (z. B. aus SiC) verwendet werden kann, da das Kobalt bei höheren Temperaturen mit Silizium reagiert.

Es ist eine Aufgabe der vorliegenden Erfindung, ausgehend von einem Kalibrierverfahren der vorstehend erläuterten Art dessen Nachteile zu überwinden und ein alternatives Kalibrierverfahren aufzuzeigen.

Das erfindungsgemäße Verfahren zum Kalibrieren einer Vorrichtung zur thermischen Analyse der eingangs genannten Art umfasst folgende Schritte:
- Durchführen von photothermischen Messungen mittels der photothermischen Messeinrichtung
   - an einer bestimmten Probe, die hierfür nacheinander in den mehreren Probenhaltern gehalten und jeweils einer photothermischen Messung unterzogen wird, oder
   - an mehreren gleichartigen Proben, die hierfür in jeweils einem der mehreren Probenhalter gehalten und jeweils einer photothermischen Messung unterzogen werden,
      wobei bei den photothermischen Messungen jeweils eine erste Seite der betreffenden Probe mit einem elektromagnetischen Anregungspuls bestrahlt wird und eine infolge des Anregungspulses von einer der ersten Seite gegenüberliegenden zweiten Seite dieser Probe abgegebene Wärmestrahlung erfasst wird,
- Vergleichen von Ergebnissen der photothermischen Messungen für die mehreren Probenhalter,
- Ermitteln jeweils wenigstens eines Korrekturparameters für jeden Probenhalter basierend auf einem Ergebnis des Vergleichs,
- Kalibrieren der Temperaturmesseinrichtung und/oder der Temperiereinrichtungen basierend auf den ermittelten Korrekturparametern.

Die Grundidee der Erfindung besteht darin, die in einer betreffenden Vorrichtung ohnehin vorhandene photothermische Messeinrichtung einzusetzen, um zunächst für jeden der mehreren Probenhalter, bzw. gleichbedeutend die mehreren "Probenpositionen", eine photothermische Messung (der erfindungsgemäß vorgesehenen Art) durchzuführen, wobei auf Grund der Verwendung einer bestimmten Probe oder mehrerer gleichartiger Proben "normalerweise" zu erwarten wäre, dass die Messungen identische Ergebnisse liefern, um sodann in der Praxis tatsächlich auftretende Unterschiede der Ergebnisse zur Ermittlung von Korrekturparametern für die einzelnen Probenhalter bzw. Probenpositionen heranzuziehen, um schließlich basierend auf den ermittelten Korrekturparametern die Temperaturmesseinrichtung und/oder die Temperiereinrichtungen der Vorrichtung zu kalibrieren.

In einer besonders vorteilhaften Ausführungsform des Kalibrierverfahrens werden die vorstehend genannten Verfahrensschritte durchgeführt, nachdem bereits zuvor für (zumindest) einen Probenhalter bzw. (zumindest) eine Probenposition in irgendeiner geeigneten Weise eine möglichst präzise Kalibrierung der Temperaturmesseinrichtung (und/oder der Temperiereinrichtung) hinsichtlich der Temperaturmessung (bzw. Temperierung) für diese Probenposition durchgeführt wurde (z. B. mittels eines Schmelzstandards oder dergleichen). Die vorstehend genannten Verfahrensschritte ermöglichen dann mittels der Korrekturparameter eine sehr einfach durchzuführende Kalibrierung der Temperaturmesseinrichtung hinsichtlich der Temperaturmessung der übrigen Probenpositionen.

Gemäß der Erfindung kann alternativ oder zusätzlich zu einem Kalibrieren der Temperaturmesseinrichtung auch ein Kalibrieren der mehreren, jeweils einem der Probenhalter zugeordneten Temperiereinrichtungen vorgesehen sein. Der Hintergrund ist folgender:
Bei der thermischen Analyse sollten sämtliche Proben mittels der Temperiereinrichtungen möglichst gleichmäßig temperiert werden (identische Probentemperaturen) und es sollte diese "gemeinsame" Probentemperatur mittels der Temperaturmesseinrichtung möglichst genau erfasst werden.

Während mit "Kalibrierung der Temperaturmesseinrichtung" gemeint ist, dass ein oder mehrere Korrekturparameter ermittelt und gespeichert werden, um diese bei nachfolgenden thermischen Analysen für eine genauere Erfassung der Probentemperatur berücksichtigen zu können, ist mit "Kalibrierung der Temperiereinrichtungen" gemeint, dass ein oder mehrere Korrekturparameter ermittelt und gespeichert werden, um diese bei nachfolgenden thermischen Analysen für eine gleichmäßigere Temperierung der Proben berücksichtigen zu können.

Während demnach zur Kalibrierung der Temperaturmesseinrichtung ermittelte Korrekturparameter eine Umsetzung von Temperatursensorsignalen in eine "erfasste Probentemperatur" festlegen bzw. modifizieren (korrigieren), so dienen zur Kalibrierung der Temperiereinrichtungen ermittelte Korrekturparameter dazu, das Verhältnis der einzelnen, mittels der einzelnen Temperiereinrichtungen bewirkten Heizleistungen (bzw. Kühlleistungen) zueinander festzulegen bzw. zu modifizieren (korrigieren).

In einer Ausführungsform weist die Temperaturmesseinrichtung einen in der Probenkammer angeordneten, für die mehreren Probenhalter gemeinsam genutzten Temperatursensor auf. Alternativ oder zusätzlich weist die Temperaturmesseinrichtung für jeden der Probenhalter jeweils einen in der Probenkammer angeordneten, dem betreffenden Probenhalter (bzw. der entsprechenden "Probenposition") zugeordneten Temperaturmesssensor auf.

Wenn die Temperaturmesseinrichtung nur einen für sämtliche Probenhalter gemeinsam genutzten Temperatursensor aufweist, so ist klar, dass damit z. B. die bereits erwähnte "gemeinsame Probentemperatur" gemessen werden kann (wobei wenigstens ein Korrekturparameter bei der konkreten Umsetzung des Temperatursensorsignals in die "erfasste gemeinsame Probentemperatur" berücksichtigt werden kann).

Wenn die Temperaturmesseinrichtung jedoch (alternativ oder zusätzlich) für jeden der Probenhalter jeweils einen individuellen, d.h. dem betreffenden Probenhalter zugeordneten, Temperaturmesssensor aufweist, so kann bei der Temperaturerfassung vorteilhaft eine detailliertere Information gewonnen werden (nämlich was unerwünschte Temperaturunterschiede zwischen den einzelnen Probenhaltern bzw. Probenpositionen anbelangt). Jedoch kann auch in diesem Fall z. B. die erwähnte "gemeinsame Probentemperatur" erfasst werden, etwa durch eine Mittelwertbildung der Ergebnisse der Einzeltemperaturmessungen. Alternativ, etwa wenn eine gewisse Ungleichmäßigkeit der Temperierung der mehreren Proben in Kauf genommen wird, so können die Ergebnisse der Einzeltemperaturmessungen bei der Messdatenaufnahme als individuelle (ggf. verschiedene) Einzeltemperaturen für die einzelnen Proben berücksichtigt werden.

Wie erwähnt liegt im Rahmen der Erfindung auch die Verwendung des Kalibrierverfahrens für eine Vorrichtung, bei welcher die Temperaturmesseinrichtung z. B. nur einen (einzigen), für die mehreren Probenhalter gemeinsam genutzten Temperatursensor aufweist. Angenommen, dieser Temperatursensor gibt (z. B. auf Grund einer vorangegangenen Kalibrierung für eine "erste Probenposition") die Temperatur einer ein einem "ersten Probenhalter" befindlichen Probe "richtig" an, wohingegen zunächst unbekannt ist, ob der Temperatursensor auch die Temperatur einer in einem "zweiten Probenhalter" (oder noch weiteren Probenhaltern) befindlichen Probe richtig angibt, so kann die gemäß der Erfindung vorgesehene Durchführung von photothermischen Messungen für diese beiden Probenpositionen (und ggf. weitere Probenpositionen) einen entsprechenden tatsächlichen Temperaturunterschied aufdecken, wenn nämlich die beiden bzw. noch weitere photothermische Messungen unterschiedliche Ergebnisse liefern.

Auf Basis der ermittelten Korrekturparameter kann in diesem Fall z. B. die Temperaturmesseinrichtung hinsichtlich der Temperaturerfassung für den zweiten Probenhalter (und analog weitere Probenhalter) korrigiert werden und/oder es kann die Ansteuerung (z. B. Heizstromeinstellung) für die dem zweiten Probenhalter zugeordnete Temperiereinrichtung derart korrigiert werden, dass die dort herrschende Temperatur genauer der am ersten Probenhalter herrschenden Temperatur entspricht.

In einer Ausführungsform umfasst die Vorrichtung ferner eine ansteuerbare Probenwechseleinrichtung, mittels welcher jeder der Probenhalter in eine für eine photothermische Messung an einer darin gehaltenen Probe geeignete Relativposition bezüglich der photothermischen Messeinrichtung bringbar ist. Damit kann vorteilhaft ein und dieselbe photothermische Messeinrichtung für jeden der mehreren Probenhalter verwendet werden.

In einer Ausführungsform weist jede Temperiereinrichtung einen an dem zugeordneten Probenhalter angeordneten elektrisch betreibbaren Heizmantel auf.

In einer Ausführungsform ist die Steuer- und Auswerteeinrichtung dazu ausgebildet, für eine Durchführung des Kalibrierverfahrens folgende Schritte durchzuführen:
- optional: Ansteuern einer Probenwechseleinrichtung der Vorrichtung, um nacheinander jeden der Probenhalter in eine für eine photothermische Messung an einer darin gehaltenen Probe geeignete Relativposition bezüglich der photothermischen Messeinrichtung zu bringen,
- für jede der mehreren photothermischen Messungen:
   - Ansteuern der betreffenden Temperiereinrichtung zur Einstellung einer vorbestimmten Temperatur der betreffenden Probe und Ansteuern der photothermischen Messeinrichtung zum Bestrahlen der ersten Seite der Probe mit einem vorbestimmten elektromagnetischen Anregungspuls,
   - Messen der Temperatur der Probe mittels der Temperaturmesseinrichtung, und
   - Aufnehmen von Messdaten, welche einen zeitabhängigen Verlauf der von der zweiten Seite der Probe abgegebenen Wärmestrahlung repräsentieren,
- Vergleichen von Ergebnissen der photothermischen Messungen für die mehreren Probenhalter,
- Ermitteln jeweils wenigstens eines Korrekturparameters für jeden Probenhalter basierend auf einem Ergebnis des Vergleichs,
- Kalibrieren der Temperaturmesseinrichtung und/oder der Temperiereinrichtungen basierend auf den ermittelten Korrekturparametern.

In einer Ausführungsform umfasst das Vergleichen der Ergebnisse der photothermischen Messungen einen Vergleich der jeweils im zeitabhängigen Verlauf der abgegebenen Wärmestrahlung erreichten Maximalwerte.

Die Erfindung wird nachfolgend anhand von Ausführungsbeispielen mit Bezug auf die beigefügten Zeichnungen weiter beschrieben. Es stellen dar:
- Fig. 1: eine Vorrichtung zur thermischen Analyse von Proben gemäß eines Ausführungsbeispiels,
- Fig. 2: eine Auftragung der Temperaturleitfähigkeit von Silizium in Abhängigkeit von der Temperatur,
- Fig. 3: ein Diagramm eines beispielhaften Verlaufes einer bei einer photothermischen Messung an einer Probe erfassten Wärmestrahlung in Abhängigkeit von der Zeit, und
- Fig. 4: ein Ablaufdiagramm eines Verfahrens zum Kalibrieren einer Vorrichtung zur thermischen Analyse.

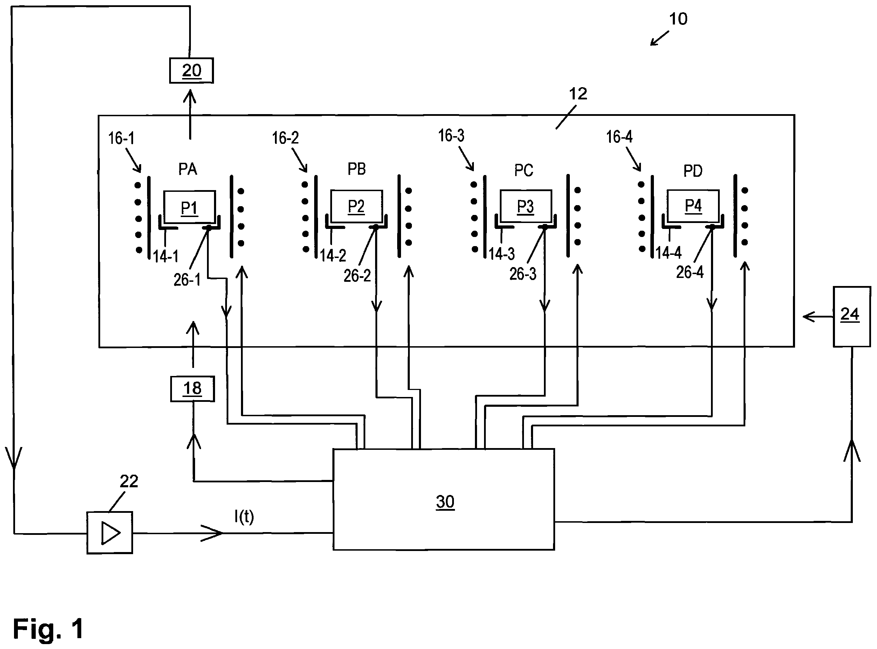

Fig. 1 zeigt schematisch eine Vorrichtung 10 zur thermischen Analyse von Proben.

Die Vorrichtung 10 umfasst eine Probenkammer 12 mit mehreren (hier vier) Probenhaltern 14-1, 14-2, 14-3 und 14-4, die jeweils zum Halten einer Probe ausgebildet sind.

Das Vorsehen mehrerer Probenhalter ermöglicht vorteilhaft ein gleichzeitiges Temperieren und Untersuchen mehrerer Proben, was in der Praxis eine erhebliche Zeitersparnis bedeutet. In Fig. 1 beispielhaft eingezeichnet sind vier Proben P1, P2, P3 und P4, die jeweils auf einem der Probenhalter 14-1 bis 14-4 positioniert sind und somit z. B. im Ablauf eines einzigen "Temperaturprogrammes" der von der Vorrichtung 10 vorgesehenen thermischen Analyse unterzogen werden können.

Als Temperaturprogramm ist hierbei die Festlegung eines zeitabhängigen Verlaufes einer Temperatur im Inneren der Probenkammer 12 und somit der Temperatur der Proben (in Fig. 1: P1 bis P4) zu verstehen.

Oftmals bevorzugt ist ein Temperaturprogramm, bei welchem ausgehend von einer Starttemperatur der Innenraum der Probenkammer 12 schrittweise bis hin zu einer Endtemperatur erhöht wird, wobei nach jedem Temperaturschritt unter Konstanthaltung der (idealerweise identischen) Temperatur die Proben hinsichtlich wenigstens einer von der Temperatur der Probe verschiedenen physikalischen Eigenschaft untersucht werden, um entsprechende Messdaten (in Abhängigkeit von der Probentemperatur) aufzunehmen.

Insbesondere zur Realisierung eines Temperaturprogrammes mit schrittweiser Veränderung der Probentemperatur hat es sich als vorteilhaft herausgestellt, wenn wie in Fig. 1 auch dargestellt für jeden der mehreren Probenhalter 14-1 bis 14-4 eine individuelle, d.h. diesem zugeordnete ansteuerbare Temperiereinrichtung 16-1, 16-2, 16-3 bzw. 16-4 zum Temperieren der vom betreffenden Probenhalter gehaltenen Probe vorgesehen ist. Dies verringert die "thermische Trägheit", so dass im Verlauf des Temperaturprogrammes vorteilhaft relativ rasch von einer Zieltemperatur auf eine andere Zieltemperatur gewechselt werden kann, was wiederum in der Praxis eine erhebliche Zeitersparnis bedeutet.

Wie in Fig. 1 symbolisiert dargestellt, können die Temperiereinrichtungen 16-1 bis 16-4 jeweils einen an dem zugeordneten Probenhalter 14-1, 14-2, 14-3 bzw. 14-4 angeordneten bzw. die jeweils davon gehaltene Probe P1, P2, P3 bzw. P4 umgebenden elektrisch betreibbaren Heizmantel aufweisen.

Die Positionen der mehreren, im dargestellten Beispiel vier Proben P1 bis P4 auf den Probenhaltern 14-1 bis 14-4 werden im Folgenden auch als "Probenpositionen" PA, PB, PC und PD bezeichnet.

Es versteht sich, dass bei einer gleichzeitigen Temperierung der Proben P1 bis P4 die Temperatur im Inneren der Probenkammer 12 möglichst gleichmäßig sein sollte, bzw. zumindest die unmittelbar an den Probenpositionen PA, PB, PC und PD herrschenden Temperaturen möglichst gleich sein sollten. Zu diesem Zweck sind die Probenhalter 14-1 bis 14-4 sowie deren zugeordnete ansteuerbaren Temperiereinrichtungen 16-1 bis 16-4 völlig identisch ausgebildet und darüber hinaus möglichst symmetrisch (z. B. äquidistant auf einer Kreislinie im Zentrum der Probenkammer 12 verteilt) angeordnet, wobei die einzelnen Temperiereinrichtungen 16-1 bis 16-4 im Wesentlichen gleichartig (z. B. mit gleichem elektrischen Heizstrom) angesteuert werden. Insofern sollten die Temperaturen an den Probenpositionen PA bis PD "im Idealfall" völlig identisch sein.

Es hat sich jedoch herausgestellt, dass eine solche "Symmetrierung der Temperierung" in der Praxis nicht immer den Anforderungen genügt, insbesondere wenn es um die Durchführung von thermischen Analysen mit hochpräziser Temperaturerfassung und/oder sehr gleichmäßiger Temperierung sämtlicher Proben (identische Probentemperaturen) geht.

Vor diesem Hintergrund ist für die dargestellte Vorrichtung 10 ein besonderes Verfahren zum Kalibrieren der Temperaturerfassung und/oder der Temperierung (gemäß einer Heiz- bzw. Kühlleistung der einzelnen Temperiereinrichtungen) vorgesehen, welches weiter unten noch detailliert erläutert wird.

Was die mittels der Vorrichtung 10 durchführbare "thermische Analyse" der betreffenden Proben (z. B. der dargestellten Proben P1 bis P4) anbelangt, so ist in Fig. 1 beispielhaft eine "photothermische Messeinrichtung" umfassend eine Anregungsquelle, hier einen Laser 18, und ein Detektor, hier ein Infrarot-Detektor 20, vorgesehen. Die Anregungsquelle bzw. der Laser 18 dient zum Bestrahlen einer ersten Seite einer jeweiligen Probe mit einem elektromagnetischen Anregungspuls, und der Detektor 20, hier in Verbindung mit einem nachgeordneten Signalverstärker 22, dient zum Erfassen einer infolge des Anregungspulses von einer der ersten Seite gegenüberliegenden zweiten Seite der betreffenden Probe abgegebenen Wärmestrahlung. Damit können in an sich bekannter Weise z. B. Temperaturleitfähigkeit und/oder spezifische Wärmekapazität der Proben analysiert werden.

Im dargestellten Beispiel ist die Vorrichtung 10 mit einer bei 24 symbolisierten ansteuerbaren Probenwechseleinrichtung ausgestattet, mittels welcher jeweils einer der Probenhalter 14-1 bis 14-4 in einen (hier stationär vorgesehenen) Strahlengang der photothermischen Messeinrichtung (18, 20) gebracht werden kann. In der in Fig. 1 dargestellten Situation befindet sich die erste Probe P1 im Strahlengang der photothermischen Messeinrichtung.

Derartige Probenwechseleinrichtungen sind aus dem Stand der Technik bekannt und bedürfen daher hier keiner detaillierten Erläuterung. Beispielsweise kann es sich um einen motorisch antreibbaren "Revolver" handeln, bei welchem je nach angesteuerter Drehstellung einer der Probenhalter 14-1 bis 14-4 in den Strahlengang der photothermischen Messeinrichtung hineingedreht werden kann.

Die Vorrichtung 10 umfasst des Weiteren eine Temperaturmesseinrichtung zum Messen der Temperatur der Proben auf den Probenhaltern 14-1 bis 14-4. Im dargestellten Beispiel weist diese Temperaturmesseinrichtung für jeden der Probenhalter 14-1 bis 14-4 jeweils einen in unmittelbarer Nähe der entsprechenden Probenposition PA, PB, PC bzw. PD angeordneten und somit dem jeweiligen Probenhalter 14-1, 14-2, 14-3 bzw. 14-4 zugeordneten Temperaturmesssensor 26-1, 26-2, 26-3 bzw. 26-4 auf.

Alternativ oder zusätzlich könnte die Temperaturmesseinrichtung auch einen in der Probenkammer 12 angeordneten, für die mehreren Probenhalter 14-1 bis 14-4 gemeinsam genutzten Temperatursensor aufweisen.

Schließlich umfasst die Vorrichtung 10 eine Steuer- und Auswerteeinrichtung 30 zum Ansteuern der Temperiereinrichtungen 16-1 bis 16-4 und der photothermischen Messeinrichtung und zum bereits erwähnten Aufnehmen von Messdaten, welche wenigstens eine von der Temperatur der Proben verschiedene physikalische Eigenschaft der Proben in Abhängigkeit von der Temperatur der Proben repräsentieren (hier z. B. temperaturabhängige Temperaturleitfähigkeit der Proben P1 bis P4).

Neben der photothermischen Messeinrichtung könnten auch weitere Messeinrichtungen von der Vorrichtung 10 beinhaltet sein, z. B. eine Wägeeinrichtung zum Wiegen der Proben, oder eine Kraftmesseinrichtung zum Messen einer von den Proben (z.B. aufgrund thermischer Ausdehnung) ausgeübten Kraft, eine Längenmesseinrichtung zum Messen einer von den Proben (z. B. aufgrund thermischer Ausdehnung) vollführten Dimensionsänderung usw. Zur Realisierung der Erfindung notwendig ist jedoch nur die erwähnte photothermischen Messeinrichtung.

Die Steuer- und Auswerteeinrichtung 30 ist im dargestellten Beispiel ferner zum Ansteuern der Probenwechseleinrichtung 24 ausgebildet, um z. B. im Verlauf eines Messprogrammes zur thermischen Analyse der mehreren Proben P1 bis P4 nacheinander jeden der Probenhalter 14-1 bis 14-4 in eine für eine photothermische Messung an einer darin gehaltenen Probe geeignete Relativposition bezüglich der photothermischen Messeinrichtung zu bringen.

Daher kann nach einer Bestückung der Vorrichtung mit den betreffenden Proben, z. B. den Proben P1 bis P4, mittels der Steuer- und Auswerteeinrichtung 30 ein automatisiertes Messprogramm zur thermischen Analyse der Proben P1 bis P4 dergestalt durchgeführt werden, dass gemäß eines vorab z. B. durch einen Benutzer eingegebenes Temperaturprogrammes die Temperiereinrichtungen simultan für eine schrittweise Erhöhung der Probentemperatur angesteuert werden und dass bei jeder somit eingestellten Temperatur bzw. Temperaturstufe der Laser 18 zum Bestrahlen einer ersten Seite der betreffenden Probe mit einem vorbestimmten elektromagnetischen Anregungspuls angesteuert wird, und dass ein vom Detektor 20 infolge dieser Bestrahlung geliefertes Signal der Steuerund Auswerteeinrichtung 30 zugeführt wird, um so entsprechende Messdaten aufzunehmen (welche hier z. B. den temperaturabhängigen Verlauf der Temperaturleitfähigkeit der einzelnen Proben P1 bis P4 angeben können).

Bei jeder im Verlauf des Temperaturprogrammes eingestellten Temperatur können durch eine entsprechende Ansteuerung der Probenwechseleinrichtung 24 nacheinander sämtliche Proben P1 bis P4 einer photothermischen Messung unterzogen werden, woraufhin die Steuer- und Auswerteeinrichtung 30 durch entsprechende Ansteuerung der Temperiereinrichtungen 16-1 bis 16-4 die nächste einzustellende Temperatur ansteuert und das vorbeschriebene Prozedere für diese geänderte Temperatur wiederholt wird usw., bis eine durch das Temperaturprogramm definierte Endtemperatur erreicht ist.

Bei der Temperierung, die durch eine simultane Ansteuerung der einzelnen Temperiereinrichtungen 16-1 bis 16-4 bewerkstelligt wird, kann vorteilhaft z. B. eine Regelung (auf Basis der momentan erfassten Probentemperatur) durchgeführt werden, sei es eine "Proportionalregelung", oder (bevorzugt) eine komplexere Regelung (z. B. "PI"- oder "PID"-Regelung).

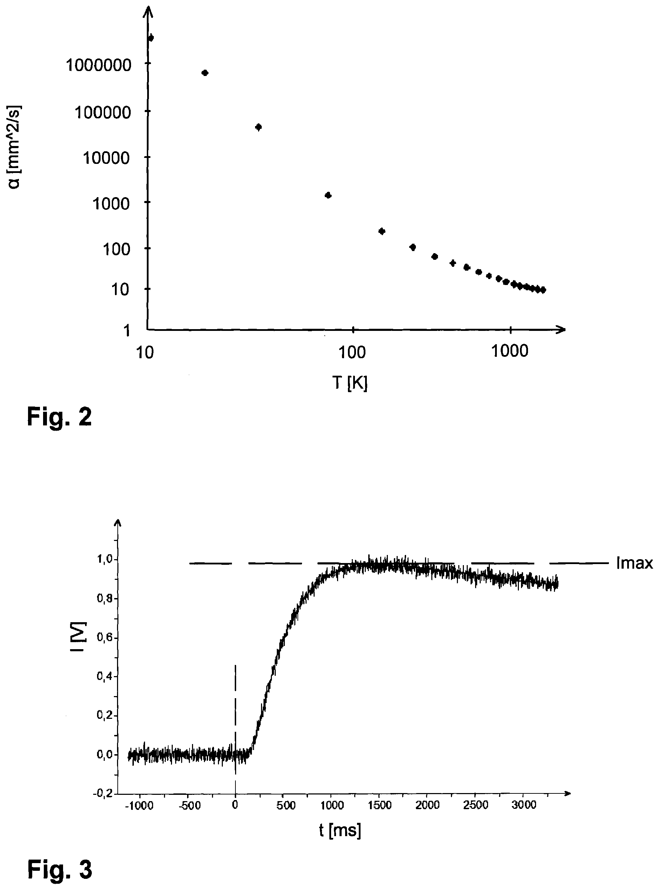

Fig. 2 zeigt, als Beispiel einer mittels der Vorrichtung 10 analysierbaren physikalischen Eigenschaft einer Probe, die Temperaturleitfähigkeit α einer Probe aus Silizium in Abhängigkeit von der Probentemperatur T.

Daraus ist ersichtlich, dass die Temperaturleitfähigkeit α mit steigender Temperatur T stark absinkt. Im dargestellten Bereich von 10 K bis 1.000 K verringert sich α beispielsweise um etwa fünf Größenordnungen. Die bereits beschriebene photothermische Messeinrichtung der Vorrichtung 10 erlaubt es, derartige temperaturabhängige Verläufe der Temperaturleitfähigkeit α von nahezu beliebigen Proben zu bestimmen. Wenngleich eine derartige Bestimmung der Temperaturleitfähigkeit α als solche bereits bekannt ist (so genanntes LFA ("Laser/Light Flash Analysis")-Verfahren), so sei diese Methode anhand von Fig. 3 kurz erläutert.

Fig. 3 zeigt beispielhaft, für eine opake Probe, den zeitlichen Verlauf eines für eine Intensität der mittels des Detektors 20 erfassten Wärmestrahlung repräsentativen Detektorsignals I in Abhängigkeit von der Zeit t.

Es sei der Einfachheit halber angenommen, dass der zeitabhängige Verlauf I(t) gleichzeitig repräsentativ für den zeitlichen Verlauf einer Temperatur T2(t) an der zweiten (dem Detektor 20 zugewandten) Seite der Probe, nachfolgend auch als "Probenrückseite" bezeichnet, ist.

Ganz allgemein kann in Kenntnis der Eigenschaften des Detektors 20 und der Verstärkungscharakteristik des dem Detektor 20 nachgeordneten Signalverstärkers 22 mittels der Steuer- und Auswerteeinrichtung 30 stets in geeigneter Weise eine entsprechende Umrechnung der unmittelbar aufgenommenen Größe I(t) in eine für eine nachfolgende weitere Auswertung gegebenenfalls benötigte Größe T2(t) vorgenommen werden.

In Fig. 3, zu einem Zeitpunkt t=0 erfolgt die Bestrahlung der ersten (dem Laser 18 zugewandten) Seite der Probe, nachfolgend auch als "Probenvorderseite" der Probe bezeichnet, mit einem kurzen Anregungspuls von vorgegebener Pulsenergie und/oder vorgegebenen zeitlichen Verlauf einer Strahlungsstromdichte (Pulsdauer z. B. ca. 10 µs).

Bei einer opaken, d. h. für Wärmestrahlung undurchlässigen Probe entspricht ein aus der Bestrahlung resultierender Wärmeeintrag an der Probenvorderseite dem mit der Bestrahlungsfläche multiplizierten Integral der Strahlungsstromdichte des Anregungspulses über die Zeit t. Die Zeitdauer (zeitliche "Breite") des Anregungspulses ist in der Praxis zumeist (und bevorzugt) sehr viel kleiner als diejenige Zeitdauer, in der sich darauffolgend eine, je nach Probendicke und Progeneigenschaften (insbesondere z. B. Temperaturleitfähigkeit α und Wärmeleitfähigkeit k), charakteristische Temperaturvariation an der Probenrückseite ergibt. In diesem Fall genügt es, wenn z. B. lediglich die Gesamtenergie des Anregungspulses (z. B. ca. 10 J) bekannt ist.

Wie aus Fig. 3 ersichtlich, beginnt zu einem Zeitpunkt von etwa t=130 ms ein Anstieg der Temperatur bzw. der Wärmestrahlungsintensität I(t) an der Probenrückseite. Dies bedeutet anschaulich, dass die an der Probenvorderseite aufgebrachte Wärmeenergie nach etwa 130 ms an der Probenrückseite "ankommt".

Zu einem Zeitpunkt von etwa t=1.500 ms durchläuft die Intensität I(t) ein Maximum. Dies bedeutet anschaulich, dass ab diesem Zeitpunkt an der Probenrückseite durch Konvektion und/oder Strahlung in die Umgebung mehr Wärme "verloren geht" als durch das Probeninnere hindurch durch Konvektion (noch) nachgeliefert wird.

Es ist klar, dass die genannten Zeitpunkte, aber auch der gesamte detaillierte Verlauf der Wärmestrahlungsintensität I(t) insbesondere von den Materialparametern α und k abhängen und durch ein geeignetes physikalisch-mathematisches Modell beschreibbar sind, so dass durch eine mathematische Ausgleichsrechnung anhand des ermittelten zeitlichen Verlaufes der Intensität I(t) ohne Weiteres die Parameter α und k des Modells abgeschätzt werden können (z. B. mathematischer "Fit" der Parameter α und k mittels der "Methode der kleinsten Fehlerquadrate" oder dergleichen) und so die Materialparameter Wärmeleitfähigkeit (k) und Temperaturleitfähigkeit (α) der betreffenden Probe ermittelt (berechnet) werden können.

Die Steuer- und Auswerteeinrichtung 30 kann mit geeigneten Auswertemitteln (z. B. programmgesteuerte Rechnereinheit) und Anzeige- und/oder Speichermitteln zur Ausgabe bzw. Speicherung der ermittelten Materialparameter ausgestattet (oder verbunden) sein.

Die vorstehend beschriebene Methode, einschließlich eines zur Auswertung geeigneten physikalisch-mathematischen Modells ist z. B. in der Patentveröffentlichung DE 10 2012 106 955 A1 beschrieben.

Im Rahmen der vorliegenden Erfindung ist die bei der Vorrichtung 10 vorgesehene und von dem Laser 18 und dem Detektor 20 gebildete photothermische Messeinrichtung einerseits nur ein Beispiel einer Messeinrichtung, mit welcher die für die "thermische Analyse" aufzunehmenden Messdaten gewonnen werden, andererseits jedoch auch eine erfindungsgemäß (nämlich für die Kalibrierung der Vorrichtung 10) zwingend erforderliche Messeinrichtung, wie dies aus der nachfolgenden Beschreibung der Kalibrierung verständlich wird.

Im dargestellten Ausführungsbeispiel basiert die für die Messdatenaufnahme erforderliche Temperaturmessung (Thermometrie) auf den von den Temperaturmesssensoren (z. B. Thermoelemente) zur Steuer- und Auswerteeinrichtung 30 gelieferten Sensorsignalen (z. B: Thermospannungen).

Bei dieser Temperaturmessung ergibt sich in der Praxis für jede der Probenpositionen PA bis PD grundsätzlich ein mehr oder weniger großer und systematischer Messfehler dadurch, dass die Temperaturmesssensoren 26-1 bis 26-4 nicht in der jeweiligen Probe P1, P2, P3 bzw. P4, sondern benachbart dazu (hier z. B. am betreffenden Probenhalter) angeordnet sind.

In diesem Zusammenhang ist außerdem von Bedeutung, dass in der Praxis z. B. auf Grund unvermeidbarer Toleranzen hinsichtlich der Herstellung und Anordnung der Probenhalter 14-1 bis 14-4 sowie der zugeordneten Temperiereinrichtungen 16-1 bis 16-4 (oder sonstiger "Asymmetrien") selbst im Falle einer identischen simultanen Ansteuerung der Temperiereinrichtungen 16-1 bis 16-4, z. B. mit einer bestimmten identischen Heizstromstärke, sich unerwünschte Temperaturunterschiede zwischen den einzelnen Probenpositionen PA bis PD ergeben können.

Aus diesen Gründen besitzt die Steuer- und Auswerteeinrichtung 30 eine Kalibrierfunktionalität, mittels welcher unter Heranziehung entsprechender "Korrekturparameter" für die einzelnen Probenpositionen PA bis PD eine "Korrektur" der Temperaturerfassung und/oder der Temperierung (jeweils basierend auf den erwähnten Korrekturparametern) durchgeführt wird.

Nachfolgend wird ein bei der Vorrichtung 10 vorgesehenes Verfahren zum Kalibrieren der Temperaturmesseinrichtung und/oder der Temperiereinrichtungen erläutert, worunter die Ermittlung und Abspeicherung der benötigten Korrekturparameter zur nachfolgenden Verwendung bei thermischen Analysen verstanden wird (um die Probentemperatur(en) genauer zu erfassen bzw. die Temperaturen der einzelnen Proben P1 bis P4 möglichst identisch vorzusehen).

Dieses Kalibrierverfahren umfasst folgende Schritte:
- Durchführen von photothermischen Messungen mittels der photothermischen Messeinrichtung (hier: Laser 18, Detektor 20, Signalverstärker 22)
   - an einer bestimmten Probe, die hierfür nacheinander in den mehreren Probenhaltern (hier: 14-1 bis 14-4) gehalten und jeweils einer photothermischen Messung unterzogen wird, oder

   - an mehreren gleichartigen Proben, die hierfür in jeweils einem der mehreren Probenhalter (hier: 14-1 bis 14-4) gehalten und jeweils einer photothermischen Messung unterzogen werden,
      wobei bei den photothermischen Messungen jeweils eine erste Seite der betreffenden Probe mit einem elektromagnetischen Anregungspuls bestrahlt wird und eine infolge des Anregungspulses von einer der ersten Seite gegenüberliegenden zweiten Seite dieser Probe abgegebene Wärmestrahlung erfasst wird,
- Vergleichen von Ergebnissen der photothermischen Messungen für die mehreren Probenhalter (hier: 14-1 bis 14-4),
- Ermitteln jeweils wenigstens eines Korrekturparameters für jeden Probenhalter (hier: 14-1 bis 14-4) bzw. jede Probenposition (hier: PA bis PD) basierend auf einem Ergebnis des Vergleichs,
- Kalibrieren der Temperaturmesseinrichtung (hier: Temperaturmesssensoren 26-1 bis 26-4) und/oder der Temperiereinrichtungen (hier: Temperiereinrichtungen 16-1 bis 16-4) basierend auf den ermittelten Korrekturparametern.

Im dargestellten Ausführungsbeispiel ist dieses Kalibrierverfahren insofern vorteilhaft automatisiert vorgesehen, als die Steuer- und Auswerteeinrichtung 30 dazu ausgebildet ist, für eine Durchführung des Kalibrierverfahrens folgende Schritte durchzuführen:
- Ansteuern der Probenwechseleinrichtung 24 der Vorrichtung 10, um nacheinander jeden der Probenhalter 14-1 bis 14-4 in eine für eine photothermische Messung an einer darin gehaltenen Probe geeignete Relativposition (in Fig. 1 ganz links) bezüglich der photothermischen Messeinrichtung zu bringen,
- für jede der mehreren photothermischen Messungen:
   - Ansteuern der betreffenden Temperiereinrichtung 16-1, 16-2, 16-3 bzw. 16-4 zur Einstellung einer vorbestimmten Temperatur T der betreffenden Probe und Ansteuern der photothermischen Messeinrichtung zum Bestrahlen der ersten Seite der Probe mit einem vorbestimmten elektromagnetischen Anregungspuls (bevorzugt völlig identisch bei jeder photothermischen Messung),
   - Messen der Temperatur der Probe mittels der Temperaturmesseinrichtung 26-1 bis 26-4, und
   - Aufnehmen von Messdaten (vgl. z. B. I(t) in Fig. 3), welche einen zeitabhängigen Verlauf der von der zweiten Seite der Probe abgegebenen Wärmestrahlung repräsentieren,
- Vergleichen von Ergebnissen (Messdaten) der photothermischen Messungen für die mehreren Probenhalter 14-1 bis 14-4,
- Ermitteln jeweils wenigstens eines Korrekturparameters für jeden Probenhalter 14-1 bis 14-4 basierend auf einem Ergebnis des Vergleichs,
- Kalibrieren der Temperaturmesseinrichtung 26-1 bis 26-4 (in Verbindung mit der Steuer- und Auswerteeinrichtung 30) und/oder der Temperiereinrichtungen 16-1 bis 16-4 (in Verbindung mit der Steuer- und Auswerteeinrichtung 30) basierend auf den ermittelten Korrekturparametern.

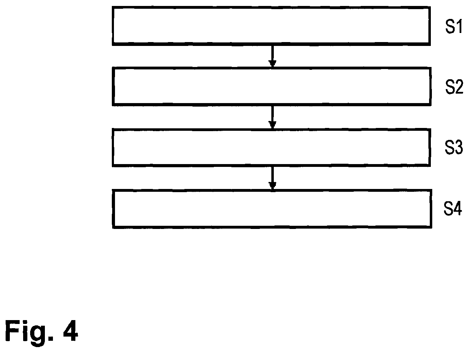

Fig. 4 zeigt nochmals die gemäß dieses Beispiels wesentlichen Verfahrensschritte:
In einem Schritt S1 werden die photothermischen Messungen durchgeführt.
In einem Schritt S2 werden die Ergebnisse der photothermischen Messungen für die mehreren Probenhalter miteinander verglichen.
In einem Schritt S3 werden basierend auf dem Ergebnis des Vergleichs die Korrekturparameter für jeden Probenhalter ermittelt.
In einem Schritt S4 wird die eigentliche Kalibrierung durchgeführt, indem die Korrekturparameter in der Steuer- und Auswerteeinrichtung 30 gespeichert und bei nachfolgenden thermischen Analysen entsprechend berücksichtigt werden (bei der Temperaturmessung bzw. den Ansteuerungen der Temperiereinrichtungen 16-1 bis 16-4).

In einer besonders bevorzugten Ausführungsform umfasst das Vergleichen der Ergebnisse der photothermischen Messungen (Schritt S2) einen Vergleich der jeweils im zeitabhängigen Verlauf der abgegebenen Wärmestrahlung (vgl. z. B. Intensität I in Fig. 3) erreichten Maximalwerte.

Im Beispiel von Fig. 3 ist ein solcher Maximalwert eingezeichnet und mit Imax bezeichnet.

Im Idealfall, bei Durchführung der photothermischen Messungen an einer bestimmten Probe oder an mehreren gleichartigen Proben mit jeweils identischem elektromagnetischen Anregungspuls, sollte der Maximalwert Imax für sämtliche Probenhalter 14-1 bis 14-4 bzw. Probenpositionen PA bis PD gleich groß sein.

Wenn jedoch im Schritt S2 diesbezüglich Unterschiede zwischen den einzelnen Messungen festgestellt werden, so werden diese Unterschiede im Schritt S3 zur Ermittlung geeigneter Korrekturparameter herangezogen, so dass bei Berücksichtigung dieser Korrekturparameter bei nachfolgenden thermischen Analysen die Temperaturerfassung genauer funktioniert und/oder die Temperierung der einzelnen Proben (vgl. z. B. Proben P1 bis P4 in Fig. 1) gleichmäßiger ist (im Sinne einer "einheitlichen" bzw. gemeinsamen Probentemperatur für sämtliche Proben).

Hierzu nochmals ein Beispiel mit Bezug auf Fig. 1:
Angenommen, die Temperaturerfassungseinrichtung (26-1 bis 26-4 in Verbindung mit 30) wurde hinsichtlich des ersten Probenhalters 14-1 bzw. der ersten Probenposition PA bereits anderweitig kalibriert, indem z. B. ein oder mehrere "Schmelzstandards" (Probe(n) mit vorbekannter Schmelztemperatur) auf der Probenposition PA temperiert wurden und anhand eines Abgleiches der vom Temperaturmesssensor 26-1 gemessenen Probenschmelztemperatur(en) mit der bzw. den vorbekannten Schmelztemperatur(en) die Sensorsignalverarbeitung in der Steuer- und Auswerteeinrichtung 30 so eingestellt wurde, dass die mittels des Temperaturmesssensors 26-1 ermittelte Probentemperatur "richtig" (exakt gemessen) ist.

Es können dann, z. B. für dieselbe(n) "Kalibrierungstemperatur(en)" (oder andere als "Stützstellen" dienende Kalibrierungstemperaturen, gemäß der Schritte S1 und S2 für sämtliche Probenpositionen PA bis PD die erläuterten phtotothermischen Messungen durchgeführt und die Ergebnisse dieser Messungen miteinander verglichen werden, wobei im Folgenden beispielhaft angenommen sei, dass hierbei die jeweiligen im zeitabhängigen Verlauf der abgegebenen Wärmestrahlung erreichten Maximalwerte Imax miteinander verglichen werden.

Ferner sei beispielhaft angenommen, dass (für eine bestimmte, für die Position PA exakt gemessene und somit bekannte Kalibriertemperatur), die Maximalwerte Imax für die Probenpositionen PA, PB und PC tatsächlich identisch sind, jedoch für die letzte Probenposition PD sich eine Abweichung ergibt, also für die Probenposition PD ein Wert von Imax gemessen wird, der z. B. um 1 % größer ist als die entsprechenden Werte für die Probenpositionen PA, PB und PC.

Wenn aber für die Probenposition PD der Wert von Imax größer ist als der Wert für die Probenposition PA, so bedeutet dies, dass die auf der Position PD vermessene Probe andere Eigenschaften besitzt als die (zuvor oder gleichzeitig) auf der Position PA vermessene Probe, was wiederum dadurch erklärbar ist, dass die Probe auf der Position PD tatsächlich auf eine andere Temperatur als die Probe auf der Position PA temperiert wurde.

Unter Berücksichtigung einer (bekannten) Temperaturabhängigkeit des Wertes von Imax von der Probentemperatur kann hierbei von der Steuer- und Auswerteeinrichtung 30 ermittelt werden, ob die tatsächliche Temperatur auf der Position PD kleiner oder größer als die Temperatur auf der Position PA ist, und gegebenenfalls auch, wie groß diese Temperaturabweichung genau ist.

Auf dieser Basis kann die Steuer- und Auswerteeinrichtung 30 einen "Temperierungs-Korrekturparameter" für die Position PD so festlegen (bzw. einen bereits gespeicherten entsprechenden Korrekturparameter so aktualisieren), dass das bei der verwendeten Kalibrierungstemperatur an die Temperierungseinrichtung 16-4 gelieferte Ansteuersignal eine bessere Angleichung der Temperatur von Position PD an die Temperatur von Position PA bewirkt.

Die Ermittlung des "Temperierungs-Korrekturparameters" für zumindest die nicht zuvor anderweitig bereits kalibrierten Probenpositionen (hier z. B. PB, PC und PD) kann z. B. auch iterativ (durch mehrfache Durchführung der erwähnten Kalibrierschritte) durchgeführt werden, und auch für mehrere verschiedene Kalibrierungstemperaturen durchgeführt werden, die als "Stützstellen" eines zu ermittelnden temperaturabhängigen Verlaufes der Korrekturparameter dienen können, der zwischen den Stützstellen z. B. durch eine Interpolation ergänzt wird.

Beispielsweise (und zweckmäßigerweise) nach einer derartigen Kalibrierung der Temperierung kann auch eine Kalibrierung der Temperaturerfassung durchgeführt werden, indem die im Beispiel als "exakt" anzunehmende Temperaturerfassung für die Probenposition PA als Basis dafür herangezogen wird, um durch Auswertung der für die übrigen Positionen, hier PB, PC und PD, erfassten Temperaturen zu beurteilen, inwieweit eine Korrektur der Temperaturerfassung für diese übrigen Positionen PB, PC und PD erforderlich ist.

Hierzu kann die Steuer- und Auswerteeinrichtung 30 für die Positionen PB, PC und PD jeweils einen "Temperaturerfassungs-Korrekturparameter" so festlegen (bzw. einen bereits gespeicherten entsprechenden Korrekturparameter so aktualisieren), dass bei der verwendeten Kalibrierungstemperatur die für die Positionen PB, PC und PD korrigiert erfassten Temperaturen der für die Position PA erfassten Temperatur entsprechen.

Die Ermittlung der "Temperaturerfassungs-Korrekturparameter" für die betreffenden Probenpositionen (hier: PB, PC und PD) kann vorteilhaft auch für mehrere verschiedene Kalibrierungstemperaturen durchgeführt werden, die als "Stützstellen" eines zu ermittelnden temperaturabhängigen Verlaufes der Korrekturparameter dienen können, der zwischen den Stützstellen z. B. durch eine Interpolation definiert wird.

Wenn sowohl die Temperierung als auch die Temperaturerfassung kalibriert wurden, so ist bei nachfolgenden thermischen Analysen sowohl die Temperierung vergleichmäßigt (durch die verbesserte Einstellung der Heizleistungsverhältnisse zwischen den einzelnen Temperiereinrichtungen 16-1 bis 16-4) als auch die Genauigkeit der Temperaturmessung vergrößert (hier z. B. durch eine "korrigierte" Umsetzung der von den Temperaturmesssensoren 26-1 bis 26-4 gelieferten Signale in entsprechende Temperaturangaben).

Zusammenfassend ist bei der erfindungsgemäßen Kalibrierung der Vorrichtung 10 ermöglicht, deren Temperaturmesseinrichtung und/oder deren Temperiereinrichtungen zu kalibrieren. Gegebenenfalls kann hierbei iterativ vorgegangen werden, bis einerseits anhand der Werte von Imax festgestellt wird, dass bei der Temperierung tatsächlich für alle Positionen PA bis PD die gleiche Probentemperatur erreicht wird (erkennbar an identischen Werten von Imax) und andererseits sämtliche für die Positionen PA bis PD mittels der Temperaturmesssensoren 26-1 bis 26-4 ermittelten Probentemperaturen gleich sind. Besonders vorteilhaft ist hierbei, wenn vor den beschriebenen Kalibrierschritten bereits zumindest für einen der mehreren Probenhalter 12-1 bis 12-4 eine z. B. anderweitig realisierte Kalibrierung der Temperaturerfassung durchgeführt wurde. In diesem Fall kann mit den Kalibrierschritten gewissermaßen ein "Abgleich der übrigen Probenhalter" (auf den zuvor kalibrierten Probenhalter) bewerkstelligt werden.

Insbesondere bei einer Vorrichtung zur thermischen Analyse, bei welcher die Analyse über einen größeren Temperaturbereich vorgesehen ist, sollte das beschriebene Kalibrierverfahren für mehrere als "Stützpunkte über diesen Temperaturbereich" dienende Probentemperaturen ("Kalibriertemperaturen") durchgeführt werden, um dementsprechend die Kalibrierung der Temperaturmesseinrichtung und/oder der Temperiereinrichtungen nicht nur für eine bestimmte Temperatur, sondern für mehrere "Kalibriertemperaturen" zu erzielen.

## Patentansprüche

1. Verfahren zum Kalibrieren einer Vorrichtung (10) zur thermischen Analyse von Proben, wobei die Vorrichtung (10) umfasst:
- eine Probenkammer (12) mit mehreren Probenhaltern (14-1 bis 14-4), die jeweils zum Halten einer Probe (P1 bis P4) ausgebildet sind,
- für jeden der mehreren Probenhalter (14-1 bis 14-4) eine diesem zugeordnete ansteuerbare Temperiereinrichtung (16-1 bis 16-4) zum Temperieren der von diesem Probenhalter (14-1 bis 14-4) gehaltenen Probe (P1 bis P4),
- eine Temperaturmesseinrichtung (16-1 bis 26-4) zum Messen der Temperatur der Proben (P1 bis P4),
- eine photothermische Messeinrichtung (18, 20, 22) zum Bestrahlen einer ersten Seite der Proben (P1 bis P4) mit einem elektromagnetischen Anregungspuls und zum Erfassen einer infolge des Anregungspulses von einer der ersten Seite gegenüberliegenden zweiten Seite der Proben (P1 bis P4) abgegebenen Wärmestrahlung,
- eine Steuer- und Auswerteeinrichtung (30) zum Ansteuern der Temperiereinrichtungen (16-1 bis 16-4) und der photothermischen Messeinrichtung (18, 20, 22) und zum Aufnehmen von Messdaten, welche wenigstens eine von der Temperatur der Proben (P1 bis P4) verschiedene physikalische Eigenschaft der Proben (P1 bis P4) in Abhängigkeit von der Temperatur der Proben repräsentieren,
**dadurch gekennzeichnet, dass** das Verfahren zum Kalibrieren umfasst:
- Durchführen von photothermischen Messungen mittels der photothermischen Messeinrichtung (18, 20, 22)
- an einer bestimmten Probe, die hierfür nacheinander in den mehreren Probenhaltern (14-1 bis 14-4) gehalten und jeweils einer photothermischen Messung unterzogen wird, oder
- an mehreren gleichartigen Proben, die hierfür in jeweils einem der mehreren Probenhalter (14-1 bis 14-4) gehalten und jeweils einer photothermischen Messung unterzogen werden,
wobei bei den photothermischen Messungen jeweils eine erste Seite der betreffenden Probe mit einem elektromagnetischen Anregungspuls bestrahlt wird und eine infolge des Anregungspulses von einer der ersten Seite gegenüberliegenden zweiten Seite dieser Probe abgegebene Wärmestrahlung erfasst wird,
- Vergleichen von Ergebnissen der photothermischen Messungen für die mehreren Probenhalter (14-1 bis 14-4),
- Ermitteln jeweils wenigstens eines Korrekturparameters für jeden Probenhalter (14-1 bis 14-4) basierend auf einem Ergebnis des Vergleichs,
- Kalibrieren der Temperaturmesseinrichtung (26-1 bis 26-4) und/oder der Temperiereinrichtungen (16-1 bis 16-4) basierend auf den ermittelten Korrekturparametern.

2. Verfahren nach Anspruch 1, wobei die Vorrichtung (10) ferner eine ansteuerbare Probenwechseleinrichtung (24) umfasst, mittels welcher jeder der Probenhalter (14-1 bis 14-4) in eine für eine photothermische Messung an einer darin gehaltenen Probe geeignete Relativposition bezüglich der photothermischen Messeinrichtung (18, 20, 22) bringbar ist.

3. Verfahren nach einem der vorangehenden Ansprüche, wobei jede Temperiereinrichtung (16-1 bis 16-4) einen an dem zugeordneten Probenhalter (14-1 bis 14-4) angeordneten elektrisch betreibbaren Heizmantel aufweist.

4. Verfahren nach einem der vorangehenden Ansprüche, wobei die Temperaturmesseinrichtung (26-1 bis 26-4) einen in der Probenkammer (12) angeordneten, für die mehreren Probenhalter (14-1 bis 14-4) gemeinsam genutzten Temperatursensor aufweist.

5. Verfahren nach einem der vorangehenden Ansprüche, wobei die Temperaturmesseinrichtung (26-1 bis 26-4) für jeden der Probenhalter (14-1 bis 14-4) jeweils einen in der Probenkammer (12) angeordneten zugeordneten Temperaturmesssensor aufweist.

6. Verfahren nach einem der vorangehenden Ansprüche, wobei die Steuer- und Auswerteeinrichtung (30) dazu ausgebildet ist, für eine Durchführung des Kalibrierverfahrens folgende Schritte durchzuführen:
- optional: Ansteuern einer Probenwechseleinrichtung (24) der Vorrichtung (10), um nacheinander jeden der Probenhalter (14-1 bis 14-4) in eine für eine photothermische Messung an einer darin gehaltenen Probe geeignete Relativposition bezüglich der photothermischen Messeinrichtung (18, 20, 22) zu bringen,
- für jede der mehreren photothermischen Messungen:
- Ansteuern der betreffenden Temperiereinrichtung (16-1 bis 16-4) zur Einstellung einer vorbestimmten Temperatur der betreffenden Probe und Ansteuern der photothermischen Messeinrichtung (18, 20, 22) zum Bestrahlen der ersten Seite der Probe mit einem vorbestimmten elektromagnetischen Anregungspuls,
- Messen der Temperatur der Probe mittels der Temperaturmesseinrichtung (26-1 bis 26-4), und
- Aufnehmen von Messdaten, welche einen zeitabhängigen Verlauf der von der zweiten Seite der Probe abgegebenen Wärmestrahlung repräsentieren,
- Vergleichen von Ergebnissen der photothermischen Messungen für die mehreren Probenhalter (14-1 bis 14-4),
- Ermitteln jeweils wenigstens eines Korrekturparameters für jeden Probenhalter (14-1 bis 14-4) basierend auf einem Ergebnis des Vergleichs,
- Kalibrieren der Temperaturmesseinrichtung (26-1 bis 26-4) und/oder der Temperiereinrichtungen (16-1 bis 16-4) basierend auf den ermittelten Korrekturparametern.

7. Verfahren nach einem der vorangehenden Ansprüche, wobei das Vergleichen der Ergebnisse der photothermischen Messungen einen Vergleich der jeweils im zeitabhängigen Verlauf der abgegebenen Wärmestrahlung erreichten Maximalwerte (Imax) umfasst.

## Claims

1. A method for calibrating a device (10) for the thermal analysis of samples, the device (10) comprising:
- a sample chamber (12) having a plurality of sample holders (14-1 to 14-4), which are in each case constructed for holding a sample (P1 to P4),
- a controllable temperature control device (16-1 to 16-4) for each of the plurality of sample holders (14-1 to 14-4), which is assigned to the same, for controlling the temperature of the sample (P1 to P4) held by this sample holder (14-1 to 14-4),
- a temperature measuring device (16-1 to 26-4) for measuring the temperature of the samples (P1 to P4),
- a photothermal measuring device (18, 20, 22) for irradiating a first side of the samples (P1 to P4) with an electromagnetic excitation pulse and for detecting thermal radiation emitted by a second side of the samples (P1 to P4), which is opposite the first side, as a consequence of the excitation pulse,
- a control and evaluation device (30) for controlling the temperature control devices (16-1 to 16-4) and the photothermal measuring device (18, 20, 22) and for recording measurement data, which represent at least one physical property of the samples (P1 to P4), which is different from the temperature of the samples (P1 to P4), as a function of the temperature of the samples,
**characterized in that** the method for calibration comprises:
- carrying out photothermal measurements by means of the photothermal measuring device (18, 20, 22)
- on a certain sample, which is held successively in the plurality of sample holders (14-1 to 14-4) for this purpose and in each case subjected to a photothermal measurement, or
- on a plurality of samples of the same kind, which is held in each case in one of the plurality of sample holders (14-1 to 14-4) for this purpose and are in each case subjected to a photothermal measurement,
wherein, in the photothermal measurements, in each case a first side of the relevant sample is irradiated with an electromagnetic excitation pulse and thermal radiation emitted by a second side of this sample, which is opposite the first side, as a consequence of the excitation pulse,
- comparing results of the photothermal measurements for the plurality of sample holders (14-1 to 14-4),
- determining at least one correction parameter in each case for each sample holder (14-1 to 14-4) based on a result of the comparison,
- calibrating the temperature measuring device (26-1 to 26-4) and/or the temperature control devices (16-1 to 16-4) based on the correction parameters determined.

2. The method according to Claim 1, wherein the device (10) further comprises a controllable sample changing device (24), by means of which each of the sample holders (14-1 to 14-4) can be brought into a suitable relative position with respect to the photothermal measuring device (18, 20, 22) for a photothermal measurement on a sample held therein.

3. The method according to one of the preceding claims, wherein each temperature control device (16-1 to 16-4) has a heating jacket, which can be operated electrically, arranged on the assigned sample holder (14-1 to 14-4).

4. The method according to one of the preceding claims, wherein the temperature measuring device (26-1 to 26-4) has a temperature sensor, which is arranged in the sample chamber (12) and used jointly for the plurality of sample holders (14-1 to 14-4).

5. The method according to one of the preceding claims, wherein the temperature measuring device (26-1 to 26-4) has an assigned temperature measuring sensor for each of the sample holders (14-1 to 14-4) in each case arranged in the sample chamber (12).

6. The method according to one of the preceding claims, wherein the control and evaluation device (30) is designed, for carrying out the calibration method, to carry out the following steps:
- optionally: controlling a sample changing device (24) of the device (10), in order to bring each of the sample holders (14-1 to 14-4) one after the other into a suitable relative position with respect to the photothermal measuring device (18, 20, 22) for a photothermal measurement on a sample held therein,
- for each of the plurality of photothermal measurements:
- controlling the relevant temperature control device (16-1 to 16-4) to set a predetermined temperature of the relevant sample and controlling the photothermal measuring device (18, 20, 22) for irradiating the first side of the sample with a predetermined electromagnetic excitation pulse,
- measuring the temperature of the sample by means of the temperature measuring device (26-1 to 26-4), and
- recording measurement data, which represent a time-dependent course of the thermal radiation emitted by the second side of the sample,
- comparing results of the photothermal measurements for the plurality of sample holders (14-1 to 14-4),
- determining at least one correction parameter in each case for each sample holder (14-1 to 14-4) based on a result of the comparison,
- calibrating the temperature measuring device (26-1 to 26-4) and/or the temperature control devices (16-1 to 16-4) based on the correction parameters determined.

7. The method according to one of the preceding claims, wherein the comparison of the results of the photothermal measurements comprises a comparison of the maximum values (Imax) respectively achieved in the time-dependent course of the emitted thermal radiation.

## Revendications

1. Procédé d'étalonnage d'un dispositif (10) destiné à l'analyse thermique d'échantillons, le dispositif (10) comprenant :
- une chambre d'échantillons (12) pourvue de plusieurs porte-échantillons (14-1 à 14-4), dont chacun est conçu pour maintenir un échantillon (P1 à P4),
- pour chacun des plusieurs porte-échantillons (14-1 à 14-4), un système de régulation de la température (16-1 à 16-4) activable, qui lui est associé, destiné à tempérer l'échantillon (P1 à P4) maintenu par ledit porte-échantillon (14-1 à 14-4),
- un système de mesure de la température (16-1 à 26-4), destiné à mesurer la température des échantillons (P1 à P4),
- un système de mesure (18, 20, 22) photothermique, destiné à irradier un premier côté des échantillons (P1 à P4) avec une impulsion d'excitation électromagnétique et à détecter un rayonnement thermique délivré suite à l'impulsion d'excitation par un deuxième côté des échantillons (P1 à P4) qui est opposé au premier côté,
- un système de commande et d'évaluation (30), destiné à activer les systèmes de régulation de la température (16-1 à 16-4) et le système de mesure (18, 20, 22) photothermique et à enregistrer des données de mesure, lesquelles représentent au moins une propriété physique des échantillons (P1 à P4), qui est différente de la température des échantillons (P1 à P4), en fonction de la température des échantillons,
**caractérisé en ce que** le procédé d'étalonnage comprend les étapes consistant à :
- procéder à des mesures photothermiques à l'aide du système de mesure (18, 20, 22) photothermique,
- sur un échantillon déterminé, qui à cet effet est maintenu successivement dans les plusieurs porte-échantillons (14-1 à 14-4) et est soumis respectivement à une mesure thermique, ou
- sur plusieurs échantillons de même type, qui à cet effet sont maintenus dans respectivement l'un des plusieurs porte-échantillons (14-1 à 14-4) et sont soumis respectivement à une mesure photothermique, lors des mesures photothermiques, respectivement un premier côté de l'échantillon concerné étant irradié avec une impulsion d'excitation électromagnétique et un rayonnement thermique délivré suite à l'impulsion d'excitation par un deuxième côté dudit échantillon qui est opposé au premier côté étant détecté,
- comparer des résultats des mesures photothermiques pour les plusieurs porte-échantillons (14-1 à 14-4),
- déterminer respectivement au moins un paramètre de correction pour chaque porte-échantillon (14-1 à 14-4), sur la base d'un résultat de la comparaison,
- étalonner le système de mesure de la température (26-1 à 26-4) et/ou les systèmes de régulation de la température (16-1 à 16-4), sur la base des paramètres de correction déterminés.

2. Procédé selon la revendication 1, le dispositif (10) comprenant par ailleurs un système de changement d'échantillon (24) activable, à l'aide duquel chacun des porte-échantillons (14-1 à 14-4) est susceptible d'être amené au niveau d'un échantillon qui y est maintenu dans une position relative adaptée par rapport au système de mesure (18, 20, 22) photothermique.

3. Procédé selon l'une quelconque des revendications précédentes, chaque système de régulation de la température (16-1 à 16-4) comportant une enveloppe chauffante électriquement actionnable, placée sur le porte-échantillon (14-1 à 14-4) associé.

4. Procédé selon l'une quelconque des revendications précédentes, le système de mesure de la température (26-1 à 26-4) comportant un capteur de température placé dans la chambre d'échantillons (12), utilisé en commun pour les plusieurs porte-échantillons (14-1 à 14-4).

5. Procédé selon l'une quelconque des revendications précédentes, le système de mesure de la température (26-1 à 26-4) comportant pour chacun des porte-échantillons (14-1 à 14- 4) respectivement un capteur de mesure de la température associé, placé dans la chambre d'échantillons (12).

6. Procédé selon l'une quelconque des revendications précédentes, le système de commande et d'évaluation (30) étant conçu pour procéder, pour la réalisation du procédé d'étalonnage aux étapes suivantes consistant à :
- en option : activer un système de changement d'échantillon (24) du dispositif (10), pour amener successivement chacun des porte-échantillons (14-1 à 14-4) au niveau d'un échantillon qui y est maintenu dans une position relative adaptée par rapport au système de mesure (18, 20, 22) photothermique,
- pour chacune des plusieurs mesures photothermiques :
- activer le système de régulation de la température (16-1 à 16-4) concerné pour le réglage d'une température prédéfinie de l'échantillon concerné et activer le système de mesure (18, 20, 22) photothermique, pour l'irradiation du premier côté de l'échantillon avec une impulsion d'excitation électromagnétique prédéfinie,
- mesurer la température de l'échantillon à l'aide du système de mesure de la température (26-1 à 26-4), et
- enregistrer des données de mesure, lesquelles représentent une courbe dépendant du temps du rayonnement thermique délivré par le deuxième côté de l'échantillon,
- comparer des résultats des mesures photothermiques pour les plusieurs porte-échantillons (14-1 à 14-4),
- déterminer respectivement au moins un paramètre de correction pour chaque porte-échantillon (14-1 à 14-4), sur la base d'un résultat de la comparaison,
- étalonner le système de mesure de la température (26-1 à 26-4) et/ou les systèmes de régulation de la température (16-1 à 16-4), sur la base des paramètres de correction déterminés.

7. Procédé selon l'une quelconque des revendications précédentes, la comparaison des résultats des mesures photothermiques comprenant une comparaison des valeurs maximum (Imax) respectivement atteintes dans la courbe dépendant du temps du rayonnement thermique délivré.
